# EUROPÄISCHE PATENTSCHRIFT

(11) **EP 1 147 156 B1**
(45) Veröffentlichungstag und Bekanntmachung des Hinweises auf die Patenterteilung: **24.07.2002**
(21) Anmeldenummer: 00904847.1
(22) Anmeldetag: 20.01.2000
(51) Int. Cl.: C09J 183/04, B29C 65/48

(54) **Mittels eines Klebstoffes gebildeter Verbund aus zwei Werkstücken**
Composite structure of two workpieces obtained by means of a glue
Assemblage de deux pièces formée a'l aide d'un adhésif

(30) Priorität: 28.01.1999 DE 19903357
(43) Veröffentlichungstag der Anmeldung: 24.10.2001
(73) Patentinhaber: SIEMENS AKTIENGESELLSCHAFT, 80333 München (DE)
(72) Erfinder: PLUNDRICH, Winfried, D-82110 Germering (DE); WIPFELDER, Ernst, D-81673 München (DE); HEIN, Peter, D-13629 Berlin (DE); WILCKE, Ralf, D-13351 Berlin (DE)
(86) Internationale Anmeldenummer: DE0000170
(87) Internationale Veröffentlichungsnummer: WO0044849

(56) Entgegenhaltungen:
- EP-A- 0 432 502
- EP-A- 0 638 461
- DE-A- 19 538 468
- US-A- 4 904 414
- US-A- 4 978 696

## Beschreibung

Die Erfindung liegt auf dem Gebiet der Maschinenelemente und ist bei der Ausgestaltung eines Verbundes aus zwei Werkstücken anzuwenden, von denen das eine ein Selten-Erd-Dauermagnet und das andere ein metallischer Träger ist.

Bei einem bekannten Verbund dieser Art (DE 195 38 468 A1) ist ein erstes Werkstück in Form eines quaderförmigen Dauermagneten auf ein zweites Werkstück in Form einer zylindrischen Achse einer Magnetkupplung aufgeklebt. Hierbei wird ein Klebstoff auf Epoxidharzbasis verwendet, der einen dualen Härtungsmechanismus aufweist. - Der Erfindung liegt die Erkenntnis zugrunde, daß ein solcher Klebstoff jedoch nicht für die dauerhafte Verklebung von bestimmten großflächigen Werkstücken wie z. B. eines Selten-Erd-Dauermagneten und eines Eisenpoles einer elektrischen Maschine geeignet ist, weil das thermisch-mechanische Eigenschaftsniveau des Epoxidharzklebstoffes den gegenläufigen thermischen Ausdehnungskoeffizienten der zu verklebenden Elemente nicht derart angepaßt ist, daß die
Elastizität der damit hergestellten Fügeverbindung den extremen Anforderungen genügen könnte, die dann gegeben sind, wenn zwei verklebte Werkstücke mit gegenläufigem thermischen Ausdehnungskoeffizienten in einem Temperaturbereich von -30°C bis 150°C eingesetzt werden. Derartige Bedingungen sind beispielsweise bei permanenterregten Synchronmotoren für den Schiffsbetrieb (Jahrbuch der schiffbautechnischen Gesellschaft 81 (1987), s. 221 bis 227) gegeben. In Abhängigkeit von der Größe der aufgeklebten Permanentmagnete und damit von der Größe der Fügefläche können sich thermisch bedingte Längenänderungsunterschiede zwischen den geklebten Werkstücken von bis zu einigen hundert um ergeben; die Elastizität der Klebestelle oder Fügeverbindung sollte solche Längenänderungsunterschiede zulassen.

Der Erfindung liegt daher die Aufgabe zugrunde, einen Verbund mit den Merkmalen des Oberbegriffes des Patentanspruches 1 so auszugestalten, daß auch für Werkstücke mit gegenläufigem Ausdehnungskoeffizienten und großer Fügefläche ein über einen weiten Temperaturbereich stabiler Verbund gegeben ist.

Zur Lösung dieser Aufgabe ist gemäß der Erfindung vorgesehen, daß bei einer Fügefläche des Selten-Erd-Dauermagneten von wenigstens 1000 mm² und einem ferromagnetischen Pol einer elektrischen Maschine als metallischem Träger der.Klebstoff aus einem additionsvernetzenden, einkomponentigen und selbsthaftenden Siliconklebstoff besteht, wobei die Klebstoffschicht eine Schichtdicke von 70 bis 150 µm aufweist und kugelförmige Abstandhalter in einer Menge von 0,5 bis 5 Gew.% der Klebstoffmasse enthält.

Ein derartiger Verbund zeichnet sich durch eine über einen weiten Temperaturbereich stabile hochelastische Klebeverbindung mit sehr guter Haftung auf den beiden Werkstücken aus. Zur Einstellung des Fügespaltes haben sich Abstandshalter in Form von Glas- und/oder Keramikkugeln als vorteilhaft erwiesen. Die Glas- und/oder Keramikkugeln werden entweder in den Siliconklebstoff vor dessen Aufbringung auf das eine Werkstück eingearbeitet oder während der Fügeoffenzeit auf das fertig aufgebrachte Siliconklebstoffbett aufgestreut. Bevorzugt werden Abstandhalter mit einem Durchmesser von 100 bis 125 µm verwendet. Ihr Anteil im Siliconklebstoff beträgt vorteilhaft 0,75 bis 3, insbesondere ca. 1 Gew%, bezogen auf die gesamte Siliconklebstoffmasse.

Bei der Herstellung des Verbundes genügt es, wenn der Siliconklebstoff nur auf eines der zu verbindenden Werkstücke aufgetragen wird. Auf welches der beiden Werkstücke er aufgetragen wird, ist unerheblich. Der Siliconklebstoff wird hierbei auf das Werkstück z. B. aufgerakelt oder'mittels Dispensertechnik aufgebracht.

In den für den neuen Verbund vorgesehenen Klebstoff kann eine pyrogene Kieselsäure, z. B. Aerosil, in einer Menge von 0,1 bis 20 Gew%, bevorzugt von 0,5 bis 10 Gew% oder besonders bevorzugt von 2 bis 5 Gew%, die Gew% jeweils bezogen auf die gesamte Siliconklebstoffmasse, eingearbeitet sein. Dadurch wird das Benetzungsverhalten des Siliconklebstoffs positiv beeinflußt.

Additionsvernetzende, einkomponentige und selbsthaftende Siliconklebstoffe sind an sich bekannt. Für den neuen Verbund wird bevorzugt ein von der Herstellerfirma Dow-Corning unter der Bezeichnung "Q 3-6611" vertriebener Siliconklebstoff verwendet. Dieser Klebstoff zeichnet sich durch hohe Zugfestigkeit, hohe Dehnung und hohe Weiterreißfestigkeit in dem eingangs erwähnten Temperaturbereich aus.

Mit der erfindungsgemäßen Ausgestaltung werden geklebte Verbunde aus einem Eisenpol und einem Magnetwerkstoff, wie z. B. einem pulvermetallurgisch hergestellten Selten-Erd-Dauermagnetwerkstoff ("VACODYM"), mit einer Klebefläche von über 1000 mm² beherrscht. Die Schwierigkeit bei der Herstellung solcher Verbunde liegt darin, daß die großflächigen Fü-gepartner sehr unterschiedliche thermische Ausdehnungskoeffizienten aufweisen:

| | |
|---|---|
| "Vacodym" | -1 x 10⁻⁶/K in der Fügeebene |
| Eisen | 14,5 x 10⁻⁶/K in der Fügeebene. |

Das bedeutet, daß der Siliconklebstoff im Einsatztemperaturbereich Längenänderungen ausgleichen muß, die - bezogen auf die Abmessungen der Magnetteile - einige 100 µm betragen können. Bei ungenügender Elastizität treten Spannungen in der Klebeverbindung auf, die zu Festigkeitsverlusten und vorzeitigem Ausfall der Fügeverbindung führen. Dies haben Scherfestigkeitsuntersuchungen an Fügeverbindungen, insbesondere nach Temperaturwechselbeanspruchung, bestätigt.

Nachfolgend wird die Herstellung eines gemäß der Erfindung ausgebildeten Verbundes näher erläutert:

Zunächst wird ein Klebstoffbett aus dem additionsvernetzenden einkomponentigen , selbsthaftenden Siliconklebstoff Q3 - 6611 auf einem der beiden Werkstücke hergestellt. Dazu wird der Siliconklebstoff mit einer Schichtdicke von 100-125 µm auf das Werkstück aufgerakelt. Da es sich bei dem Siliconklebstoff um einen selbsthaftenden, d. h. mit einem internen Haftvermittler ausgestatteten Siliconklebstoff handelt, ist ein vorgeschaltetes Primern der Fügeoberfläche nicht erforderlich. Nach der üblichen Entfettung der Substratoberfläche, z. B. mit einem Lösungsmittel, kann der Siliconklebstoff direkt auf das Werkstück aufgerakelt werden. Durch Zugabe pyrogener Kieselsäure läßt sich bei Bedarf das Benetzungsverhalten weiter verbessern. Auf das fertige Siliconklebstoffbett werden dann Glaskugeln mit einem Durchmesser von 100 - 125 µm in einer Menge von ca. 1 Gew%, bezogen auf die gesamte Siliconklebstoffmasse, gestreut. Auf diese Schicht wird dann das zweite Werkstück gefügt, wobei sich ein Fügespalt in der Größe des Durchmessers der Glaskugeln ergibt. Die Endfestigkeit des Verbundes wird durch eine 2-stündige Härtung des Siliconklebstoffs bei ca. 150°C erreicht.

Ein so hergestellter Verbund wurde einer Schwerfestigkeitsuntersuchung im Einsatz unterzogen. Die Scherfestigkeit lag im Ausgangszustand und auch nach 5-tägiger Auslagerung bei 150°C über 5,7 N/mm², unabhängig davon, ob bei Raumtemperatur oder bei 150°C gemessen wurde.

Der additionsvernetzende Siliconklebstoff spaltet bei seiner Vernetzung kein Nebenprodukt ab. Der damit hergestellte Verbund erfüllt die Haftungsanforderung >1N/ mm² bei 150°C und genügt hinsichtlich thermischer Beständigkeit der Anforderung, die an einen solche Verbunde aufweisenden, permanenterregten Motor für Schiffsantriebe gestellt wird.

Der Verbund ist im vernetzten Zustand nahezu frei von mechanischen Spannungen und liefert über den gesamten Temperaturbereich von -30°C bis 150°C die geforderte Festigkeit, weil der Siliconklebstoff zu einem Elastomer mit hoher Dehnung (250 %) und hoher Weiterreißfestigkeit vernetzt.

## Patentansprüche

1. Verbund aus zwei Werkstücken, von denen das eine ein Selten-Erd-Dauermagnet und das andere ein metallischer Träger ist,
wobei der Verbund mittels eines thermisch härtbaren, einen Fügespalt bildenden Klebstoffes gebildet ist,
**dadurch gekennzeichnet,**
**daß** der Selten-Erd-Dauermagnet eine Fügefläche von wenigstens 1000 mm² aufweist und der metallische Träger ein ferromagnetischer Pol einer elektrischen Maschine ist
und **daß** der Klebstoff aus einem additionsvernetzenden, einkomponentigen und selbsthaftenden Siliconklebstoff besteht, wobei die Klebstoffschicht eine Schichtdicke von 70 bis 150 µm aufweist und kugelförmige Abstandhalter in einer Menge von 0,5 bis 5 Gew.% der Klebstoffmasse enthält.

2. Verbund nach Anspruch 1,
**dadurch gekennzeichnet,**
**daß** der Durchmesser der Abstandhalter und damit die Dicke der Klebstoffschicht zwischen 100 und 125 µm liegt.

## Claims

1. Composite structure made from two workpieces, one of which is a rare earth permanent magnet and the other a metal support, whereby the composite structure is formed by means of a thermally hardenable adhesive forming a joint gap, **characterised in that** the rare earth permanent magnet has a joint surface of at least 1000 mm² and the metal support is a ferromagnetic pole in a electric machine, and **in that** the adhesive comprises a compound-cross-linking, single component and self-adhesive silicone adhesive, whereby the adhesive layer has a layer thickness of 70 to 150 µm and contains spherical spacers in a quantity of 0.5 to 5% by weight of the mass of adhesive.

2. Composite structure according to Claim 1, **characterised in that** the diameter of the spacers and therefore the thickness of the adhesive layer is between 100 and 125 µm.

## Revendications

1. Assemblage de deux pièces dont l'une est un aimant permanent aux terres rares et l'autre est un support métallique,
l'assemblage étant formé au moyen d'une colle thermodurcissable formant une fente de joint,
**caractérisé**
**en ce que** l'aimant permanent aux terres rares a une surface de joint d'au moins de 1000 mm² et le support métallique est un pôle ferromagnétique d'une machine électrique
et **en ce que** la colle est une colle de silicone se réticulant par addition, à un seul constituant et autocollante, la couche de colle ayant une épaisseur de 70 à 150 µm et contenant des entretoises sphériques en une quantité représentant de 0,5 à 5% du poids de la composition de colle.

2. Assemblage suivant la revendication 1, **caractérisé en ce que** le diamètre des entretoises et ainsi l'épaisseur de la couche de colle est compris entre 100 et 125 µm.
